# EUROPÄISCHE PATENTSCHRIFT

(11) **EP 2 885 210 B1**
(45) Veröffentlichungstag und Bekanntmachung des Hinweises auf die Patenterteilung: **02.11.2016**
(21) Anmeldenummer: 13762785.7
(22) Anmeldetag: 10.09.2013
(51) Int. Cl.: B64D 13/00, B64C 3/36

(54) **LUFTFAHRZEUG MIT EINEM BATTERIEKÜHLSYSTEM**
AIRCRAFT WITH A BATTERY COOLING SYSTEM
AÉRONEF AVEC UN SYSTÈME DE REFROIDISSEMENT DE PILE

(30) Priorität: 26.09.2012 DE 102012217469
(43) Veröffentlichungstag der Anmeldung: 24.06.2015
(73) Patentinhaber: Siemens Aktiengesellschaft, 80333 München (DE)
(72) Erfinder: WETZEL, Wolfgang, 91074 Herzogenaurach (DE)
(86) Internationale Anmeldenummer: PCT/EP2013/068742
(87) Internationale Veröffentlichungsnummer: WO 2014/048731

(56) Entgegenhaltungen:
- EP-A2- 1 655 452
- CN-A- 102 152 849
- DE-C- 706 599
- GB-A- 407 530
- US-A- 3 005 607
- US-A- 4 962 903
- US-A1- 2010 303 634

## Beschreibung

Die Erfindung betrifft ein Luftfahrzeug mit einer Vorrichtung zur Kühlung einer Batterie mit den Merkmalen des Oberbegriffs des Anspruchs 1. Die Erfindung betrifft weiter ein Verfahren zur Kühlung einer Batterie.

Eine derartige Vorrichtung kommt bei der Kühlung von Komponenten in Fahrzeugen zum Einsatz. Die Kühlung dient dazu, die durch Verluste entstehende Wärme an die Umgebung abzuführen. Quellen von Verlustleistung und damit von Wärmeentwicklung sind in einem Fahrzeug vielfach vorhanden. Hierzu zählen insbesondere mechanische oder elektrische Verlustleistungen. Als Beispiele für die mechanische Verlustleistung ist bei einem konventionell angetriebenen Fahrzeug der Verbrennungsmotor zu nennen. Elektrische Verlustleistungen können in den Komponenten des elektrischen Antriebsstranges oder in einem Energiespeicher entstehen. Die Kühlung kann dadurch erreicht werden, dass die zu kühlende Komponente direkt von einer Kühlluftströmung überstrichen wird. Eine weitere Möglichkeit besteht darin, zunächst die Wärme an eine Flüssigkeit abzugeben, die hinterher über einen Wärmetauscher, auch Kühler genannt, an die Umgebungsluft abgegeben wird. In beiden Fällen wird ein Luftstrom benötigt, welche die Wärme an die Umgebung abführt.

In heutigen Fahrzeugen wird die Kühlung von Komponenten zum einen durch das Vorbeistreifen von Fahrtwind erzielt. Sollte dies nicht ausreichen oder ist an der betreffenden Stelle kein Fahrtwind vorhanden, werden vielfach Lüfter oder Ventilatoren eingesetzt, die einen entsprechenden Luftstrom erzeugen. Auch in Luftfahrzeugen, die neuerdings auch elektrisch angetrieben werden, sind Batterien in Tragflächen integriert, die durch Lüfter oder Ventilatoren im Inneren der Tragfläche über eine Luftzirkulation gekühlt werden.

Aus der GB 407 530 A ist bekannt, einen Kühler in einem Flugzeugflügel anzuordnen. Ein Lufteinlass ist dabei im Bereich der Flügelfront und ein Luftauslass auf der Rückseite des Flügels angeordnet.

Aus der DE 706 599 C ist ein Flugzeugtragflügel mit eingebautem Flüssigkeitskühler und als Landeklappen dienenden Kühlerklappen bekannt, wobei wobei eine Regelvorrichtung, die die Stellung der Kühlerlandeklappen in Abhängigkeit von dem jeweils auftretenden Staudruck bzw. von der Fluggeschwindigkeit steuert.

Aus der US 4 962 903 A ist ein Verfahren und eine Vorrichtung zur Beseitigung von Hitzeerscheinungen an Flügeln, die durch Luftreibung hervorgerufen werden, bekannt. Bei der Bewegung eines Flugzeugs wird dazu ein kleiner Anteil der Luft aus dem das Flugzeug umgebenden Luftstrom einem Venturi-Bereich und anschließend einer Kammer im Flügel zugeführt, wo die Luft auf natürlichem Wege verdichtet wird.

Aus der EP 1 655 452 A2 ist ein Strömungsprofilanordnung mit einem Haupthohlraum, einem Kühldurchlass und Aufprallöffnungen bekannt, wobei der Kühldurchlass eine Trennstruktur aufweist, die den Kühldurchlass in getrennte Kanäle aufteilt, um den Luftstrom, der in den Kühldurchlass durch die Aufprallöffnungen eintritt, von einem benachbarten Luftstrom, der den Kühldurchlass von einer Benachbarten Aufprallöffnung eintritt, zu isolieren. Dabei steht jeder dieser Kanäle auf einer Seite der Trennstruktur in Verbindung mit einer ersten ausgedehnten Kammer und jeder der Kanäle auf der gegenüberliegenden Seite der Trennstruktur steht mit einer zweiten ausgedehnten Kammer in Verbindung.

Aus der US 2010/303634 A1 ist ein Strömungsdynamik Bereich bekannt, der eine oder mehrere Öffnungen einer festen Größe aufweist, um den entstehenden Widerstand durch Wirbel oder Turbulenzen zu reduzieren. Die Öffnungen transportieren Energie von einem Einlass, der in einer Hochdruckoberfläche angeordnet ist, zu einem Auslass, der in einer Niederdruckoberfläche angeordnet ist. Diese Energie, die üblicherweise einen Wirbel ausbildet, wird umgelenkt und in vorteilhafter Weise abgeführt.

Der Erfindung liegt die Aufgabe zugrunde, ein Luftfahrzeug mit einem Kühlsystem anzugeben, welches eine Kühlluftströmung aufweist, die auch ohne Lüfter oder Ventilatoren zustande kommt. Darüber hinaus soll das System eine hohe Zuverlässigkeit besitzen und sich kostengünstig herstellen lassen.

Diese Aufgabe wird durch ein Luftfahrzeug mit den Merkmalen des Anspruchs 1 gelöst. Die Aufgabe wird weiter durch ein Verfahren zur Kühlung einer Batterie in einem solchen Luftfahrzeug gelöst, wobei die Batterie durch eine Luftströmung gekühlt wird, die sich aus einer Druckdifferenz zwischen Lufteinlass und Luftauslass ergibt.

Der Erfindung liegt die Erkenntnis zugrunde, dass sich eine Kühlluftströmung in einem bewegten Fahrzeug dadurch einstellt, dass ein Lufteinlass und ein Luftauslass an geeigneten Stellen des Fahrzeugs angebracht sind. Geeignete Stellen für einen Lufteinlass sind Orte mit einem relativ hohen Druck. Aufgrund des Venturi-Effektes befinden sich die Stellen mit hohem Druck dort, wo die Luft sich relativ langsam um das Fahrzeug bewegt. Demgegenüber sind Ort mit niedrigem Druck diejenigen, an denen sich die Luft um das Fahrzeug relativ schnell bewegt. Die Orte mit hohem Druck werden mit Druckseite, die Orte mit niedrigem Druck mit Saugseite bezeichnet. Für die Anordnung der Lufteinlässe sind Orte der Druckseite, für die Anordnung der Luftauslässe sind Orte der Saugseite geeignet. Durch diese Anordnung kommt eine Luftströmung von Lufteinlass zu Luftauslass zustande. Um die Strömungswirkung zu erhöhen, können zum einen die Größe der Luftein- und -auslässe variiert werden oder es können auch mehrere Luftein- und -auslässe angeordnet werden. Komponenten, die einer Kühlung bedürfen, sind in einem Fahrzeug vielfach vorhanden. Bei einem konventionell angetriebenen Fahrzeug zählt dazu beispielsweise der Verbrennungsmotor. Auch wenn dieser in einem primären Kühlkreislauf seine Verluste in Form von Wärme an ein flüssiges Kühlmedium abgibt, so muss diese anschließend, oftmals durch einen Kühler realisiert, an die Umgebung abgeführt werden. Auch hierfür kann das erfindungsgemäße System genutzt werden. Besondere Vorteile bietet die Vorrichtung zur Kühlung beim Einsatz zur Kühlung von Komponenten eines elektrischen Antriebsstrangs. Die Kühlung von elektrischen oder elektronischen Bauteilen wird hier bevorzugt direkt durch vorbeistreifende Luft durchgeführt. Ein flüssiges Kühlmedium hat den Nachteil, dass es bei Leckagen im Kühlsystem zur Beschädigung oder zur Zerstörung der elektrischen oder elektronischen Bauteile kommen kann. Die Höhe der Verluste und die damit verbundene Wärmeentwicklung ist derart moderat, dass diese durch eine Kühlung unter Ausnutzung des Venturi-Effekts gut bewerkstelligt werden kann. Im Gegensatz zu einer Flüssigkeitskühlung, bei der das Heranführen des Kühlmediums durch Schläuche an die verschiedenen Stellen geschehen muss, ist die Führung der Luft durch Leitblche bei dem erfindungsgemäßen System nicht zwingend erforderlich. Die sich aufgrund des Venturi-Effekts einstellende Kühlluftströmung kann zusätzlich bei Bedarf durch Lüfter oder Ventilatoren verstärkt werden. Im Gegensatz zu einer klassischen forcierten Luftkühlung können die Lüfter jedoch deutlich geringer dimensioniert werden. Dies bringt Vorteile hinsichtlich Baugröße, Kosten und vor allem bei der Geräuschentwicklung. Da die Vorrichtung zur Kühlung einer Komponente auch ohne Lüfter auskommt, ergeben sich hier besondere Vorteile im Bezug auf Wartung und Herstellungskosten, da im lüfterlosen Fall hierfür keine Kosten anfallen. Darüber hinaus ist ein großer Vorteil die geringere Geräuschentwicklung im Vergleich zu einer forcierten Lüftung mit Ventilatoren.

Vorteilhafte Ausgestaltungen der Erfindung sind in den abhängigen Ansprüchen angegeben.

Bei dem Fahrzeug handelt es sich um ein Luftfahrzeug. Bei diesem Anwendungsfall ist ein zuverlässig funktionierendes Kühlsystem für den Betrieb des Luftfahrzeugs zwingend erforderlich. Dies ist insbesondere bei Luftfahrzeugen mit einer elektrischen Antriebsausrüstung (Parallelen- und Serienhybrid) der Fall. Die Anforderungen an ein Kühlsystem hier sind daher insbesondere Zuverlässigkeit und geringes Gewicht. Durch den Verzicht auf Lüfter können diese Anforderungen bei gleichzeitig niedrigen Herstellungskosten einfach erfüllt werden.

Die Vorrichtung zur Kühlung ist in einem oder in mehreren Flügeln angeordnet. Der Begriff "Flügel" ist bei Luftfahrzeugen selbsterklärend. Aber auch andere Fahrzeuge können Flügel aufweisen. Dazu zählen Einrichtungen am Fahrzeug, die aufgrund von Druckdifferenzen an der Einrichtung zu einer resultierenden Kraft führen. Beispiel hierfür ist ein Spoiler an einem Kraftfahrzeug. Bei einem Luftfahrzeug, insbesondere bei einem mit elektrischer Antriebsausrüstung, ergibt sich der Vorteil, dass die Flügel zur Unterbringung von elektrischen oder elektronischen Bauelementen genutzt werden können, die einer Kühlung bedürfen. Der Flügel in einem Luftfahrzeug ist konstruktionsbedingt so gestaltet, dass er auf der Oberseite eine Saugseite und auf der Unterseite eine Druckseite darstellt. Dieser Aufbau der primär dem Entgegenwirken der Gewichtskraft dient, ist für die Nutzung der Kühlung besonders geeignet. Die Unterseite eines Flügels eignet sich im Besonderen für die Anbringung eines Lufteinlasses, während sich die Oberseite eines Flügels besonders für die Anbringung eines Luftauslasses eignet. Selbst bei kleinen Öffnungen kommt aufgrund der konstruktiv bedingten Druckdifferenz an diesen beiden Stellen schon eine relativ große Kühlluftströmung zustande. Vorteil dieser Anordnung sind damit baulich relativ kleine Luftein- und -auslässe, die jedoch trotzdem eine relativ große Kühlluftströmung bewirken. Darüber hinaus kann der Platz der Tragflächen effizient für die Platzierung von elektronischen oder elektrischen Bauelementen wie beispielsweise Energiespeicher in Form von Batterien genutzt werden.

Bei einer weiteren vorteilhaften Ausgestaltungsform der Erfindung ist der Lufteinlass oder der Luftauslass als Hutze oder als NACA-Einlauf ausgebildet. Die NACA-Öffnung ist ein strömungsgünstiger Luftein- oder -auslass. Sie ist so dimensioniert, dass sie den Luftwiderstand des Fahrzeugs nicht erhöht. Für diese Ausbildung des Luftein- bzw. -auslasses ist gewährleistet, dass die Auswirkungen auf den Betrieb des Fahrzeugs minimal sind und einen wirtschaftlichen Betrieb ermöglichen.

Bei einer weiteren vorteilhaften Ausgestaltungsform weist die Vorrichtung Mittel zur Beeinflussung der Luftmenge der Kühlluftströmung auf. Durch diese Mittel ist es möglich, die Leistungsfähigkeit der Luftkühlung zu variieren. So kann beispielsweise in Abhängigkeit vom Betriebszustand des Fahrzeugs oder auch in Abhängigkeit von den Umgebungsbedingungen die Leistungsfähigkeit der Kühlung angepasst werden. Dies kann sich positiv auf die Lebensdauer der elektrischen und elektronischen Komponenten auswirken. Die Anpassung der Kühlluftströmung kann dabei auf unterschiedliche Weise realisiert werden. Eine Möglichkeit besteht beispielsweise darin, die Anströmung der Luftein- und -auslässe und damit die Druckverhältnisse am Luftein- und -auslass zu verändern. Eine unterschiedliche Druckdifferenz bewirkt ein unterschiedliches Strömungsverhalten. Eine weitere Möglichkeit ist den Querschnitt des Luftein- oder -austritts variabel zu gestalten. Dies kann beispielsweise durch eine Blende geschehen. Diese wird bei erhöhter Kühlanforderung weiter geöffnet, als im Falle geringer Kühlanforderung.

In einem Beispiel handelt es sich bei den zu kühlenden Komponenten um elektrische und/oder elektronische Bauteile. Diese Bauteile eignen sich im Besonderen für eine Kühlung durch einen Luftstrom. Bei dieser Kühlart werden die einzelnen Komponenten durch die Luft umspült, was eine effiziente Abgabe der Verlustwärme gewährleistet. Auch das Risiko einer Beschädigung oder Zerstörung durch flüssiges Kühlmittel ist nicht vorhanden. Darüber hinaus ist diese Kühlung auch für den Einsatz bei Batterien geeignet. Neben der primär erwünschten Kühlwirkung wird gleichzeitig sichergestellt, dass im Betrieb oder im Fehlerfall entstehende Gase, wie beispielsweise Wasserstoff, zügig aus dem Einbauraum der Batterien hinausbefördert werden. Dies verhindert die Entstehung von explosiven Luft-Gas-Gemischen. Insbesondere für den Fall, dass das Kühlsystem ohne Lüfter auskommt, kann hiermit die Gefahr des Zündens von explosiven Gasgemischen weitgehend reduziert werden. Dies trägt zu einer sehr hohen Eigensicherheit des Systems bei.

In einem weiteren Beispiel handelt es sich bei der zu kühlenden Komponente um einen Energiespeicher. Insbesondere bei Luftfahrzeugen hat sich die Anordnung eines Energiespeichers in den Flügeln bewährt. In Luftfahrzeugen, die mithilfe eines Düsenantriebs fortbewegt werden, befindet sich in den Flügeln der Kraftstoff, das Kerosin. Auch dieser übernimmt in konventionellen Luftfahrzeugen die Aufgabe des Energiespeichers. Somit können auch bei der Übertragung der Konstruktion auf ein elektrisch angetriebenes Luftfahrzeugen die entsprechende Konstruktion und Platzierung von Komponenten einfach übernommen werden, wenn die Energiespeicher im Flügel untergebracht werden. Gleichzeitig stellen die Flügel einen Ort dar, der für Wartungszwecke und für die Aufladung des Energiespeichers einfach zugänglich ist.

Bei der zu kühlenden Komponente handelt es sich um eine Batterie. Räume mit Batterien erfordern oftmals eine kontinuierliche Belüftung, um die Bildung von explosiven Gas-Luft-Gemischen zu vermeiden. Gleichzeitig ist in diesem Raum die Anbringung von Komponenten, die Funken erzeugen können, ungeeignet, bzw. sogar durch Vorschriften verboten. Aus diesen Gründen stellt die erfindungsgemäße Kühlung eine ideale Möglichkeit dar, zum einen die Kühlung der Batterie zu gewährleisten und gleichzeitig die Gefahr eines Zündens eines eventuell auftretenden Gas-Luft-Gemisches weitestgehend zu reduzieren, da hier ein Lüfter, der als Funkenquelle dienen könnte, nicht vorhanden ist.

Im Folgenden wird die Erfindung anhand der in den Figuren dargestellten Ausführungsbeispiele näher beschrieben und erläutert. Es zeigen:
- FIG 1: den Querschnitt eines Flügels, in dem zu kühlende Komponenten angeordnet sind,
- FIG 2: den Druckverlauf an der Ober- und der Unterseite des Flügels,
- FIG 3: den Querschnitt eines Flügels mit einer weiteren Anordnung von Luftein- und -auslass und
- FIG 4: den Querschnitt eines Flügels mit einer alternativen Anordnung von Luftein- und -auslass.

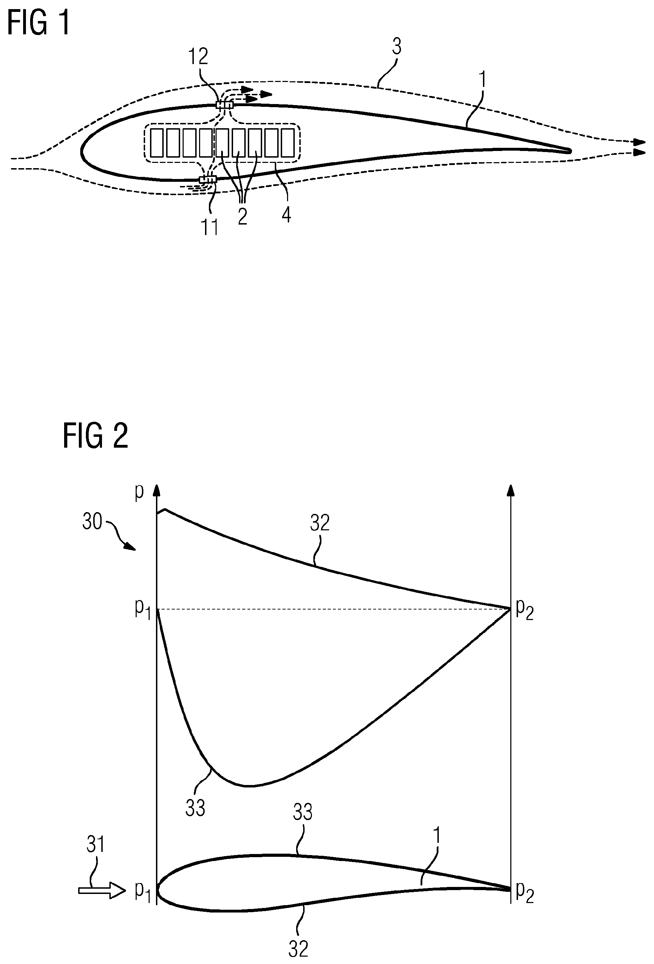

FIG 1 zeigt den Querschnitt eines Flügels 1, in dem zu kühlende Komponenten 2 angeordnet sind. Dabei befindet sich auf der Unterseite des Flügels 1 ein Lufteinlass 11 und auf der Oberseite des Flügels 1 ein Luftauslass 12. Die am Flügel 1 vorbei streifende Außenströmung 3 bewirkt einen Druckunterschied zwischen Lufteinlass 11 und Luftauslass 12 derart, dass sich eine Kühlluftströmung 4 innerhalb des Flügels 1 ausbildet. Die Kühlluftströmung 4 streift dabei die zu kühlenden Komponenten 2 und führt deren Wärme ab. Um die Kühlwirkung zu verstärken, können weitere Lufteinlässe 11 auf der Unterseite des Flügels 1 sowie weitere Luftauslässe 12 auf der Oberseite des Flügels 1 angeordnet werden. Ebenso ist eine Regulierung der Kühlluftströmung 4 durch verschiedene Maßnahmen denkbar. Eine mögliche Maßnahme ist eine im Querschnitt variabel gestaltete Öffnung des Lufteinlasses 11 bzw. des Luftauslasses 12. Durch diese variable Öffnung, die beispielsweise durch eine Blende realisiert werden kann, kann die Menge der Kühlluftströmung 4 und somit die Kühlwirkung beeinflusst werden. Ebenso ist es möglich, durch das Anbringen von beweglichen Leitblechen in der Nähe des Lufteinlasses 11 und/oder des Luftauslasses 12 die Druckverhältnisse an den betreffenden Stellen zu verändern. Damit geht eine Änderung der Druckdifferenz zwischen Lufteinlass 11 und Luftauslass 12 einher, die sich direkt auf die Kühlluftströmung 4 auswirkt.

Die Druckverhältnisse an Ober- und Unterseite des Flügels 1 zeigt FIG 2. Im unteren Teil der Figur ist schematisch ein Flügel 1 dargestellt. Die Oberseite des Flügels 1 stellt die Unterdruckseite 33 dar. Die Unterseite des Flügels 1 ist die Überdruckseite 32. Die Anströmrichtung 31 der Luft in Bezug zum Flügel 1 ist durch einen Pfeil im unteren Teil der Abbildung gekennzeichnet. Der obere Teil der Figur gibt den Druckverlauf 30 an Überdruckseite 32 und Unterdruckseite 33 des Flügels 1 an. Das vorliegende Diagramm gibt dabei den prinzipiellen Verlauf an. Mit dessen Hilfe lassen sich die Druckwerte für die Anbringungspunkte von Lufteinlass 11 und Luftauslass 12 am Flügel 1 ablesen. Die Differenz der Druckwerte für Lufteinlass 11 und Luftauslass 12 stellt die Druckdifferenz dar, die zur Ausbildung einer Kühlluftströmung 4 im Flügel 1 führt.

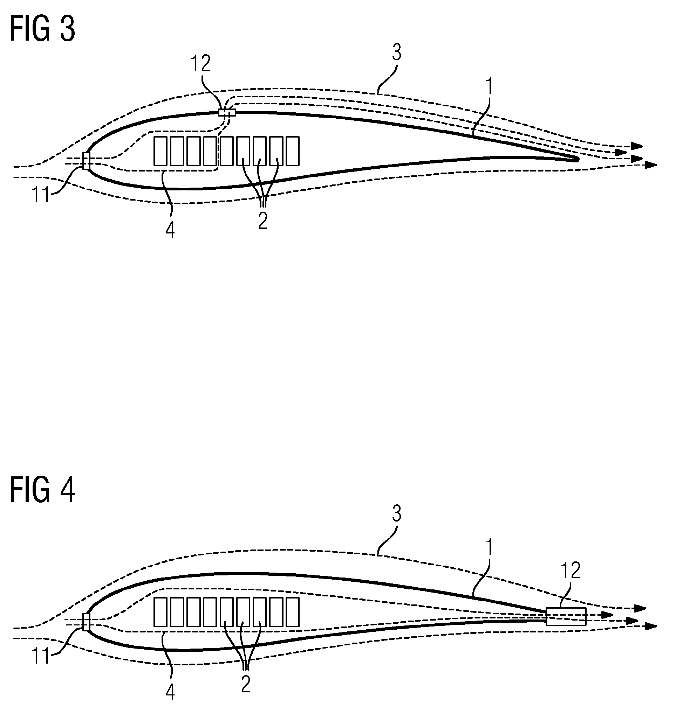

FIG 3 zeigt den Querschnitt einer weiteren Ausführungsform des Flügels 1. Neben der Unterseite des Flügels 1 eignet sich auch die Stirnseite des Flügels 1 für die Anbringung eines Lufteinlasses 11. Auch hier kommt zwischen Lufteinlass 11 und Luftauslass 12 eine Druckdifferenz zustande, aus der sich eine Kühlluftströmung 4 ausbildet. Die Druckdifferenz kann analog aus einem Diagramm nach FIG 2 abgelesen werden. Zur Vergrößerung der Kühlluftströmung 4 ist es möglich, weitere Lufteinlässe 11 auf der Unterseite des Flügels 1 und Luftauslässe 12 auf der Oberseite des Flügels 1 zu platzieren.

FIG 4 zeigt den Querschnitt einer weiteren Ausführungsform eines Flügels 1. Dieser nutzt primär keine Druckdifferenz zwischen Lufteinlass 11 und Luftauslass 12 sondern die Trägheit der Luft gegenüber dem bewegten Fahrzeug um eine Kühlluftströmung 4 durch die zu kühlenden Komponenten 2 zu erzielen. Auch diese Anordnung kann durch die Nutzung des Venturi-Effektes verstärkt werden, indem eine oder mehrere Lufteinlässe 11 auf der Unterseite des Flügels 1 platziert werden. Alternativ oder zusätzlich können weitere Luftauslässe 12 auf der Oberseite des Flügels 1 angeordnet werden. Durch diese Maßnahmen wird die Kühlleistung des Kühlsystems erfindungsgemäß weiter erhöht.

Obwohl die Erfindung im Detail durch die bevorzugten Ausführungsbeispiele näher illustriert und beschrieben wurde, ist die Erfindung nicht allein auf die offenbarten Beispiele beschränkt und andere Variationen können vom Fachmann hieraus abgeleitet werden, ohne den Schutzumfang der Erfindung zu verlassen.

## Patentansprüche

1. Luftfahrzeug mit einer Vorrichtung zur Kühlung einer Komponente (2) mittels einer Kühlluftströmung (4), wobei das Luftfahrzeug einen oder mehrere Flügel (1) aufweist, in dem die zu kühlende Komponente (2) angeordnet ist, wobei die Vorrichtung in dem einen oder in mehreren Flügeln (1) angeordnet ist, wobei die Vorrichtung mindestens einen Lufteinlass (11) und mindestens einen Luftauslass (12) aufweist, wobei der Lufteinlass (11) auf einer Druckseite und der Luftauslass (12) auf einer Saugseite derart angeordnet sind, dass sich die Kühlluftströmung (4) vom Lufteinlass (11) zum Luftauslass (12) aufgrund einer Druckdifferenz einstellt, die sich bei der Bewegung des Luftfahrzeugs aufgrund unterschiedlich hoher Strömungsgeschwindigkeiten der umgebenden Luft ergibt, **dadurch gekennzeichnet, dass** es sich bei der zu kühlenden Komponente (2) um eine Batterie handelt.

2. Luftfahrzeug nach Anspruche 1, wobei sich auf der Unterseite des Flügels (1) ein Lufteinlass (11) und auf der Oberseite des Flügels (1) ein Luftauslass (12) befindet.

3. Luftfahrzeug nach einem der Ansprüche 1 oder 2, wobei der Lufteinlass (11) und/oder der Luftauslass (12) als Hutze und/oder als NACA Einlauf ausgebildet ist.

4. Luftfahrzeug nach einem der Ansprüche 1 bis 3, wobei die Vorrichtung Mittel zur Beeinflussung der Luftmenge der Kühlluftströmung (4) aufweist.

5. Verfahren zur Kühlung einer Batterie in einem Luftfahrzeug nach einem der Ansprüche 1 bis 4, wobei die Batterie durch eine Luftströmung gekühlt wird, die sich aus einer Druckdifferenz zwischen Lufteinlass (11) und Luftauslass (12) ergibt.

6. Verfahren nach Anspruch 5, wobei zur Erhöhung der Luftströmung die Größe des Lufteinlasses (11) und Luftauflasses (12) variiert wird.

## Claims

1. Aircraft having a device for cooling a component (2) by means of a cooling air flow (4), wherein the aircraft has one or more wing(s) (1), in which the component (2) which is intended to be cooled is arranged, wherein the device is arranged in the one or more wing(s) (1), wherein the device has at least one air inlet (11) and at least one air outlet (12), wherein the air inlet (11) is arranged at a pressure side and the air outlet (12) is arranged at an intake side in such a manner that the cooling air flow (4) is produced from the air inlet (11) to the air outlet (12) as a result of a pressure difference which is produced during the movement of the aircraft as a result of different flow speeds of the surrounding air, **characterized in that** the component (2) which is intended to be cooled is a battery.

2. Aircraft according to Claim 1, wherein an air inlet (11) is located at the lower side of the wing (1) and an air outlet (12) is located at the upper side of the wing (1).

3. Aircraft according to either of Claims 1 or 2, wherein the air inlet (11) and/or the air outlet (12) is/are constructed as a scoop and/or as a NACA inlet.

4. Aircraft according to one of Claims 1 to 3, wherein the device has means for influencing the air quantity of the cooling air flow (4).

5. Method for cooling a battery in an aircraft according to one of Claims 1 to 4, wherein the battery is cooled by an air flow which is produced from a pressure difference between the air inlet (11) and the air outlet (12).

6. Method according to Claim 5, wherein to increase the air flow the size of the air inlet (11) and air outlet (12) is varied.

## Revendications

1. Aéronef ayant un dispositif de refroidissement d'un élément (2) au moyen d'un écoulement (4) d'air de refroidissement, l'aéronef ayant une ou plusieurs ailes (1), dans laquelle l'élément (2) à refroidir est disposé, le dispositif étant disposé dans la une ou dans les plusieurs ailes (1), le dispositif ayant au moins une entrée (11) d'air et au moins une sortie (12) d'air, l'entrée (11) d'air étant disposée sur un intrados et la sortie (12) d'air sur un extrados, de manière à ce que l'écoulement (4) d'air de refroidissement de l'entrée (11) d'air à la sortie (12) d'air s'établisse sur la base d'une différence de pression, qui provient du déplacement de l'aéronef en raison de vitesse d'écoulement différente de l'air ambiant,
**caractérisé en ce que** l'élément (2) à refroidir est une batterie.

2. Aéronef suivant la revendication 1, dans lequel une entrée (11) d'air se trouve du côté inférieur de l'aile (1) et une sortie (12) d'air du côté supérieur de l'aile (1).

3. Aéronef suivant la revendication 1 ou 2, dans lequel l'entrée (11) et/ou la sortie (12) d'air est constituée sous la forme d'une coque et/ou d'une entrée NACA.

4. Aéronef suivant l'une des revendications 1 à 3, dans lequel le dispositif a des moyens pour influer sur la quantité d'air de l'écoulement (4) d'air de refroidissement.

5. Procédé d'air de refroidissement d'une batterie dans un aéronef suivant l'une des revendications 1 à 4, dans lequel on refroidit la batterie par un écoulement d'air, qui provient d'une différence de pression entre une entrée (11) d'air et une sortie (12) d'air.

6. Procédé suivant la revendication 5, dans lequel, pour augmenter l'écoulement d'air, on fait varier la dimension de l'entrée (11) d'air et de la sortie (12) d'air.
